# EUROPEAN PATENT SPECIFICATION

(11) **EP 2 228 849 B1**
(45) Date of publication and mention of the grant of the patent: **14.11.2012**
(21) Application number: 10155459.0
(22) Date of filing: 04.03.2010
(51) Int. Cl.: H01M 2/02, H01M 2/34

(54) **Rechargeable battery**
Wiederaufladbare Batterie
Batterie rechargeable

(30) Priority: 04.03.2009 US 157522 P; 25.11.2009 US 626451
(43) Date of publication of application: 15.09.2010
(73) Proprietor: SB LiMotive Co., Ltd., Suwon-si Gyeonggi-do (KR)
(72) Inventor: Cheon, Sang-Eun, Yongin-si, Gyeonggi-do (KR); Hashimoto, Tatsuya, Yongin-si, Gyeonggi-do (KR); Yoo, Seok-Yoon, Yongin-si, Gyeonggi-do (KR); Kim, Dong-Wook, Yongin-si, Gyeonggi-do (KR); Lee, Chi-Young, Yongin-si, Gyeonggi-do (KR); Moon, Jong-Seok, Yongin-si, Gyeonggi-do (KR)
(74) Representative: Gulde Hengelhaupt Ziebig & Schneider

(56) References cited:
- EP-A2- 1 195 822
- KR-A- 20070 091 872
- US-A- 3 993 507
- US-A- 4 224 385

## Description

### Field of the Invention

The present invention relates to a rechargeable battery, and more particularly, to a rechargeable battery having a case that varies in length depending upon a variation in pressure.

### Description of the Related Art

A rechargeable battery differs from a primary battery in that it can be repeatedly charged and discharged, while the latter only irreversibly converts chemical energy to electrical energy. A low-capacity rechargeable battery is used as a power supply for small electronic devices, such as cellular phones, notebook computers, and camcorders, while s high-capacity rechargeable battery is used as a power supply for driving motors in hybrid vehicles and the like.

A high-power rechargeable battery using a non-aqueous electrolyte with high energy density has been recently developed. For example, the high-power rechargeable battery is constructed with a plurality of rechargeable cells coupled to each other in series such that it can be used as the power supply for driving motors in electric vehicles requiring high power.

Furthermore, one high-capacity rechargeable battery is commonly formed with a plurality of rechargeable cells coupled to each other in series. The rechargeable battery may have a cylindrical shape or a prismatic shape.

The prismatic rechargeable battery includes an electrode assembly with positive and negative electrodes and a separator interposed between the two electrodes, a case mounting the electrode assembly therein, a cap plate fitted to the case to seal it and having terminal holes, and terminals inserted into the terminal holes of the cap plate and protruding to the outside of the case.

With the conventional prismatic rechargeable battery, when overcharging continuously occurs, the battery is liable to explode due to a radical elevation in voltage, or the lifespan of the battery is liable to be radically deteriorated.

Although it is required with the prismatic battery to interrupt the electric current, it is not easy in view of the structural characteristics of the prismatic battery to employ a device for stably interrupting the electric current, differently from the cylindrical battery.

Patent documents US4224385 and US 3993507 disclose examples of expandable battery casings. KR1020070091872 discloses a battery pack equipped with a mechanical fuse, which is broken upon swelling of the cells.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of preventing overcharging.

An exemplary embodiment of the present invention provides a rechargeable battery comprising an electrode assembly having a first electrode, a second electrode, and a separator interposed between the first and the second electrodes, a case for mounting the electrode assembly therein, and a terminal electrically connected to the electrode assembly and exposed to the outside of the case. The first electrode is connected to the terminal at one end of the battery and the second electrode is connected to the case at the opposite end of the battery. The case comprises at least one length-variable region.

Advantageously, the length-variable region makes it possible to enlarge the surface area of the case so that heat generated from the interior of the case can be dissipated to the outside easily.

At least one of said connections of the first electrode to the first terminal and the second electrode to the case is preferably adapted to break upon elongation of the length-variable region forming a means for interrupting a current.

According to the present invention, a variable region is formed such that it can be elongated pursuant to the elevation in internal pressure, thereby easily interrupting the current when the internal pressure is increased. The at least one length-variable region is preferably adapted to be elongated in the lengthwise direction of the battery. It may alternatively or additionally be adapted to extend in a lengthwise direction stronger than in a width direction of the battery. It may be provided on side walls of the case not including the top and bottom surfaces of the case. The at least one length-variable region is realized as a plurality of length-variable regions provided along the height of the case being spaced apart from one another. It may be formed by a corrugation of the surface of the case. It may have convex portions formed on the outer surface of the case and concave portions formed on the inner surface of the case, the convex and concave portions being alternately arranged along the height of the case. The at least one length-variable region may be formed along the circumference of the case, and/or may have the shape of a triangle, a step, a meander, or a trapezoid. It may comprise prominent and depressed portions and/or may comprise two inclined side surfaces and a flat side interconnecting the inclined side surfaces. It may be formed of flat walls having a greater elongation property than the other side walls of the case.

The first electrode preferably comprises a first electrode uncoated region with no first electrode active material thereon at one end of the electrode assembly and the second electrode comprises an uncoated region with no second electrode active material thereon at the other end of the electrode assembly.

A first plate may be provided closing a first opening of the case at its terminal side and a second opening is provided at the bottom side of the case closed by a second plate.

The second electrode uncoated region is preferably fitted between and attached to the second plate and the case through welding such that the connection breaks upon elongation of the length-variable region establishing the means for interrupting a current.

The second electrode uncoated region may be attached and welded to the case under tensional force in a direction parallel to the elongation direction of the length-variable region such that the connection breaks upon elongation of the length-variable region establishing the means for interrupting a current; and/or may be bisected such that a first part is fitted between a first side wall of the case and the second plate and the second part is fitted between the opposite side wall of the case and the second plate such that at least one of said connections breaks upon elongation of the length-variable region establishing the means for interrupting a current. The second electrode uncoated region may be attached and welded to only a single side of the case such that the connection breaks upon elongation of the length-variable region establishing the means for interrupting a current. The second electrode uncoated region may comprise a notch such that the second electrode uncoated region is adapted to break at the notch upon elongation of the length-variable region establishing the means for interrupting a current, and/or may be attached to a lead member through welding, the lead member being attached to the bottom of the case through welding and comprising a notch which is adapted to break upon elongation of the length-variable region establishing the means for interrupting a current.

The thickness of the walls of the at least one length-variable region is preferably smaller than the thickness of other side walls of the case.

Advantageously, such regions of smaller thickness can be elongated more easily than other regions.

An insulating layer may be formed at the inner surface of the case in the region of the second electrode uncoated region such that it prevents the second electrode uncoated region from contacting the case after interruption of the current.

The case may have an upper member to which the terminal is fitted, a lower member connected to the upper member via the at least one length-variable region, and the length-variable region may have greater elongation properties than the upper and/or lower members.

The length-variable region may comprise a variable plate and/or a corrosion resistant layer formed on the inner surface of the variable plate. The variable plate may be formed of a metal or polymer of a material subjected to heat-treatment to improve its elongation property.

The corrosion resistant layer may be formed with a material that is not reactant with an electrolyte solution. Therefore, the variable region does not react with the electrolyte solution and the case is maintained to be stable in shape.

The case has preferably a prismatic shape.

Accordingly, a method for interrupting a current in a rechargeable battery is provided, the method comprising the steps of providing an electrode assembly having a first electrode, a second electrode, and a separator interposed between the first and the second electrodes, mounting the electrode assembly into a battery case, electrically connecting a terminal to the electrode assembly and exposing the terminal to the outside of the case, elongating an at least one length-variable region of the case upon a pressure increase inside the battery, and interrupting the current inside the battery as a result of the elongation of the at least one length-variable region.

The interruption is preferably provided by breaking a connection of the first electrode being connected to the terminal at one end of the battery or the connection of the second electrode to the case at the opposite end of the battery. The interruption is preferably irreversible.

According to the invention, it is further provided a use of a length variation of a battery case as a result of an increase of the inner pressure of the case for providing an irreversible interruption of the current in the battery.

Furthermore, when the variable region has concave and convex portions, the heat can be easily dissipated owing to the enlarged inner and outer surface area. In addition, when the uncoated region is directly welded to the case, the contact resistance can be reduced.

### BRIEF DESCRIPTION OF THE DRAWINGS

FIG. 1 is a perspective view of a rechargeable battery according to a first exemplary embodiment of the present invention.
FIG. 2 is an exploded perspective view of the rechargeable battery shown in FIG. 1.
FIG. 3A is a cross-sectional view of the rechargeable battery taken along the III-III line of FIG. 1, and FIG. 3B illustrates the rechargeable battery of FIG. 3A with a case where a variable region is elongated pursuant to the elevation in inner pressure.
FIG. 4 is a cross-sectional view of a rechargeable battery according to a second exemplary embodiment of the present invention.
FIG. 5 is a cross-sectional view of a rechargeable battery according to a third exemplary embodiment of the present invention.
FIG. 6 is a cross-sectional view of a rechargeable battery according to a fourth exemplary embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. For instance, it will be apparent for a person skilled in the art that the different embodiments of the length-variable regions may be combined with each other on a single battery. Also, the different embodiments of the welding regions may be exchanged between the different embodiments. If not described otherwise, the welding portions are not linked to the specific embodiment of the length-variable region and a combination of a certain welding portion with a certain length-variable portion in the following embodiments is only done by way of example and not limiting. Like reference numerals designate like elements throughout the specification.

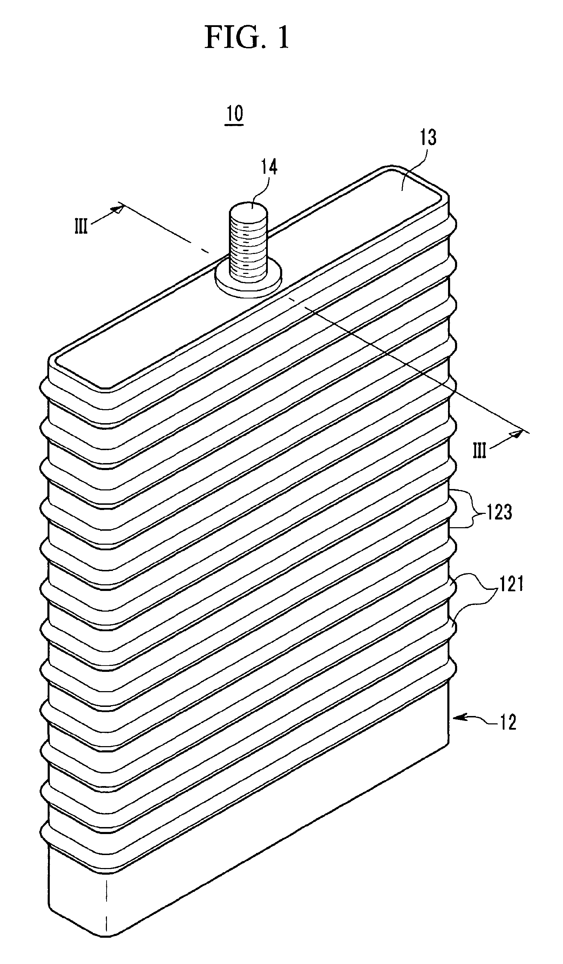

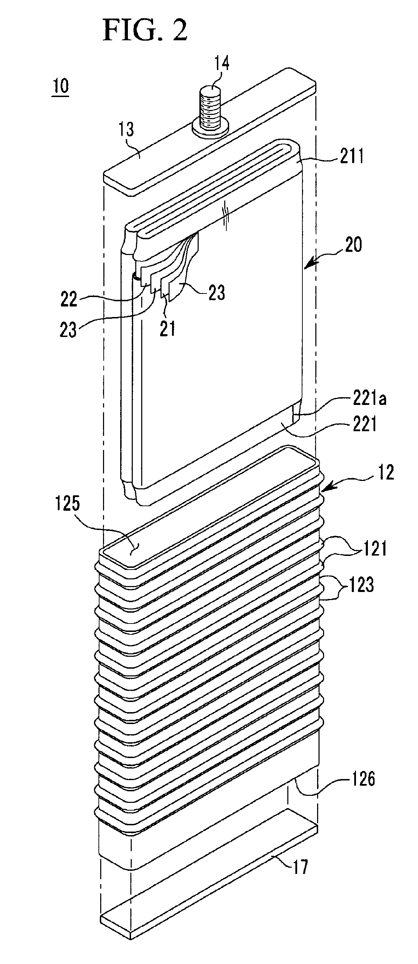

FIG. 1 is a perspective view of a rechargeable battery according to a first exemplary embodiment of the present invention, and FIG. 2 is an exploded perspective view of the rechargeable battery shown in FIG. 1.

Referring to FIG. 1 and FIG. 2, the rechargeable battery 10 includes an electrode assembly 20 where positive and negative electrodes 21 and 22 are wound by interposing an insulating separator 23 therebetween, a case 12 mounting the electrode assembly 20 therein, terminals electrically connected to the electrode assembly 20, and a first plate 13 fitted to a first opening 125 formed at the case 12.

The electrode assembly 20 is formed by winding the positive and negative electrodes 21 and 22 while interposing the separator 23 therebetween. After being wound, the electrode assembly 20 is flatly pressed in the shape of a plate, and is folded such that the outer surfaces thereof contact each other. In this way, when the electrode assembly 20 is folded, a tensional force is generated at the innermost surface of the electrode assembly 20 by way of the bent portion, and the internal surface of the electrode assembly 20 is pulled such that it proceeds substantially parallel to the external surface thereof. Accordingly, the possible formation of wrinkles at the internal surface of the electrode assembly 20 as with the conventional art is prevented so that the internal distance of the electrode assembly 20 can be kept uniform. The above structural shape of the electrode assembly is only an example of the present invention, and the electrode assembly may have various structures including a structure that is not folded after the winding, a laminated structure with a plurality of plates, and a cylindrical structure.

A positive electrode uncoated region 211 with no positive electrode active material is formed at one end of the electrode assembly 20, and a negative electrode uncoated region 221 with no negative electrode active material is formed at the other end of the electrode assembly 20.

The negative electrode 22 has a structure in which a negative electrode active material is coated on a current collector based on copper or aluminum, and the positive electrode 21 has a structure in which a positive electrode active material is coated on a current collector based on aluminum or the like.

The negative electrode active material may be selected from a carbon-based active material, a silicon-based active material, and a titanium-based active material. The positive electrode active material may be selected from a carbon-based active material, a nickel-based active material, a manganese-based active material, a cobalt-based active material, a triplet-based active material, and an olivine-based active material.

It is illustrated with the present exemplary embodiment that the positive electrode uncoated region 211 is placed at the upper side and the negative electrode uncoated region 221 is placed at the lower side, but the present invention is not limited to as illustrated. That is, it is possible that the positive electrode uncoated region 211 is placed at the lower side and the negative electrode uncoated region 221 is placed at the upper side.

The case 12 is roughly formed with a quadrangular-shaped tubular structure such that the first opening 125 is formed at the top end of the case 12 and a second opening 126 is formed at the bottom end thereof. The first plate 13 is inserted into the first opening 125, and a terminal 14 electrically connected with the electrode assembly 20 is installed such that it penetrates through the first plate 13.

A second plate 17 is inserted into the second opening 126, and a negative electrode uncoated region 221 is fitted between the second plate 17 and the case 12. As the negative uncoated region 221 is fitted between the second plate 17 and the case 12 while being bisected, a cutout 221 a is formed at the negative electrode uncoated region 221 such that the negative electrode uncoated region 221 can be easily bisected.

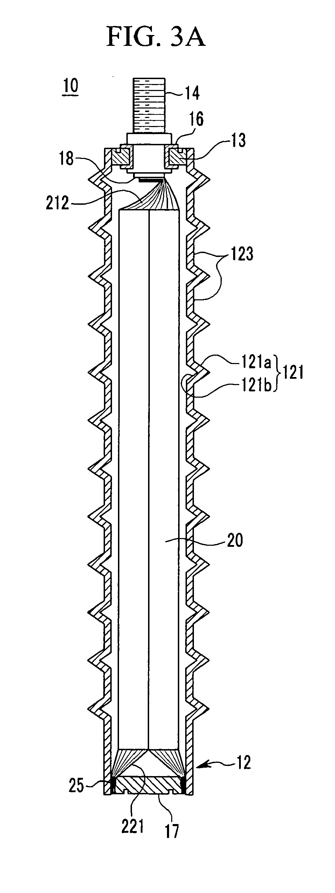

Furthermore, a variable region 121 is formed on the circumference of the case 12 such that the length thereof is enlarged as the internal pressure of the rechargeable battery 10 is increased. The variable region 121 is continuously formed along the circumference of the case 12, and has convex portions 121 a formed on the outer surface of the case 12, and concave portions 121 b formed on the inner surface of the case 12, as shown in FIG. 3A. It is illustrated in the present exemplary embodiment that the convex portion 121 a is formed at the external side and the concave portion 121 b is formed at the internal side, but the present invention is not limited to as illustrated. It is possible that the concave portion is formed at the external side while the concave portion is formed at the internal side, or that all of the convex and concave portions are formed at the external side.

A plurality of units of the variable region 121 is arranged in the direction of the height of the case 12 such that they are spaced apart from each other by a distance. Flat portions 123 are formed on the case 12, and the bent units of the variable region 121 are interposed between the flat portions 123.

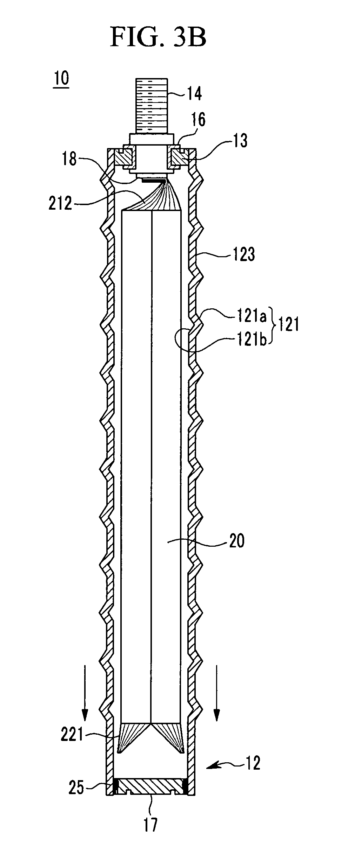

FIG. 3A is a cross-sectional view of the rechargeable battery taken along the III-III line of FIG. 1, and FIG. 3B is a cross-sectional view of the rechargeable battery of FIG. 3A where the variable region of the case is elongated in length pursuant to the increase in inner pressure.

Referring to FIG. 3A and FIG. 3B, the positive electrode uncoated region 211 is electrically connected to the terminal 14, and the negative electrode uncoated region 221 is electrically connected to the case 12. However, the present invention is not limited thereto, and it is possible that the negative electrode uncoated region is electrically connected to the terminal, and that the positive electrode uncoated region is electrically connected to the case 12.

The terminal 14 is installed at the first plate 13 via a gasket 16 such that it is clamped to the first plate 13. A current collecting plate 18 welded to the positive electrode uncoated region 212 is attached to the bottom of the terminal 14 so as to electrically connect the positive electrode uncoated region 212 with the terminal 14.

The negative electrode uncoated region 221 is fitted between the case 12 and the second plate 17, and is attached to the case 12 and the second plate 17 through welding. Accordingly, a welding region 25 is formed at the fitted area of the negative uncoated region 221 between the case 12 and the second plate 17. In this way, when the negative electrode uncoated region 221 is directly welded to the case 12, the number of parts or accessories is reduced so that the productivity is enhanced, and no separate members are required so that the contact resistance can be reduced.

A notch (not shown) is formed at the negative electrode uncoated region 221 between the welded region and the coated region so that the negative electrode uncoated region 221 may be easily broken in connection at a predetermined pressure.

Accordingly, the terminal 14 represents the positive polarity, and the case 12 represents the negative polarity. However, the present invention is not limited thereto, and it is possible that the terminal represents the negative polarity, and that the case 12 represents the positive polarity.

Furthermore, the variable region 121 is formed by bending the circumferential surface of the case 12 triangularly such that it has protruded convex portions 121 a externally formed on the case 121, and hollowed concave portions 121b internally formed on the case 121. The convex portions 121 a and the concave portions 121b are formed such that they can be smoothed out at a predetermined pressure.

As shown in FIG. 3B, when gas is generated with the repeated charging and discharging and the internal pressure of the rechargeable battery 10 is elevated to the current interruption degree, the concave portions 121 a and the convex portions 121 b are smoothed out so that the variable region 121 is elongated, and the negative electrode uncoated region 221 is broken in connection. Accordingly, the connection of the negative electrode uncoated region 221 to the case 12 and the second plate 17 is cut so that the current is interrupted. Here, the negative electrode uncoated region is operated as a current interrupter.

In this way, with the present exemplary embodiment, when the internal pressure of the rechargeable battery 10 is increased, the case 12 is elongated so that the current can be interrupted easily.

Furthermore, the variable region 121 makes it possible to enlarge the surface area of the case 12 so that the heat generated from the interior of the case 12 can be dissipated to the outside easily. With the present exemplary embodiment, the internal surface area of the case 12 as well as the external surface area thereof is enlarged so that the heat generated from the inside can be transferred to the case 12 easily.

The breakage pressure of the negative electrode uncoated region 221 can be easily established depending upon the shape and depth of the notch. Furthermore, with the welding of the negative electrode uncoated region 221, the structural intensity thereof close to the welding region is weakened due to the welding heat. In this connection, the negative electrode uncoated region 221 may be established to be broken at that weakened region thereof.

It is illustrated in the present exemplary embodiment that the negative electrode uncoated region 221 is broken in connection, but the present invention is not limited thereto. A notch may be formed at the positive electrode uncoated region 211 connected with the terminal 14 such that the positive electrode uncoated region 211 is broken in connection.

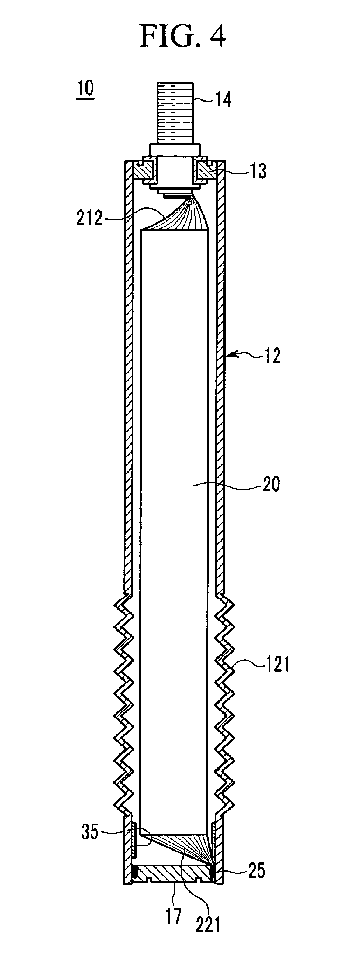

FIG. 4 is a cross-sectional view of a rechargeable battery according to a second exemplary embodiment of the present invention. Referring to FIG. 4, a rechargeable battery 10 according to the present exemplary embodiment has the same structure as that of the rechargeable battery according to the first exemplary embodiment except for the structure of a case 12, and repeated descriptions of the same structures will be omitted.

The case 12 has a tubular structure with an interior space for receiving an electrode assembly 20. The electrode assembly 28 is formed by winding the positive and negative electrodes 21 and 22 while interposing a separator 23 therebetween, but differently from that related to the first exemplary embodiment, it is not folded.

The case 12 has a variable region 32 that is smaller in thickness than surrounding regions, and includes prominent and depressed portions 121 that are formed at the variable region 32. The prominent and depressed portions 121 are continuously formed along the circumference of the case 12 such that the convex and concave portions are alternately arranged in the direction of the height of the case 12. Accordingly, the prominent and depressed portions 121 are smaller in thickness than other portions so that they can be elongated easily.

The negative electrode uncoated region 221 is biased to one side, and is inserted between the second plate 17 and the case 12 while being attached thereto through welding. In this way, when the welding of the negative electrode uncoated region 221 is performed at the one side area, the stress is easily focused at the location so that the breakage can collectively occur at that location.

Meanwhile, an insulating layer 35 is formed at the inner surface of the case 12 internal to the insertion region of the second plate 17. The insulating layer 35 prevents the negative electrode uncoated region 221 from electrically contacting the case 12 when the variable region 121 is elongated so that the negative electrode uncoated region 221 is broken in connection.

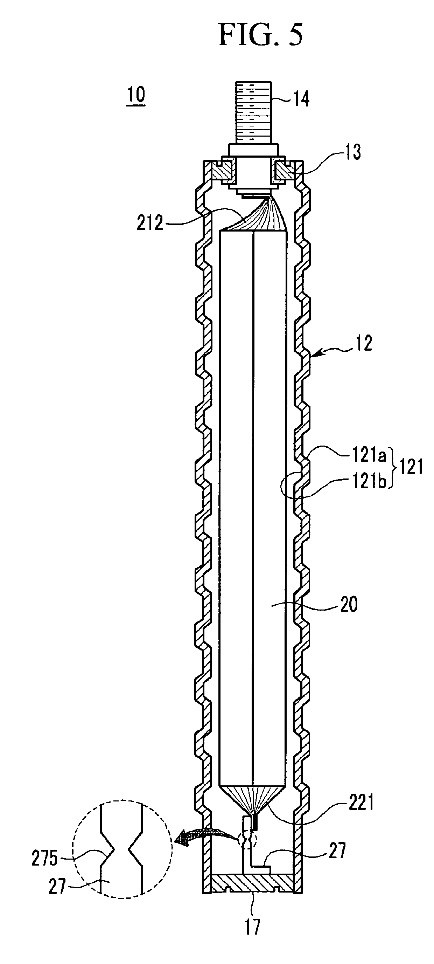

FIG. 5 is a cross-sectional view of a rechargeable battery according to a third exemplary embodiment of the present invention.

Referring to FIG. 5, a rechargeable battery 10 according to the present exemplary embodiment has the same structure as that of the rechargeable battery according to the first exemplary embodiment except for the interconnection structure of a case 12, an electrode assembly 20, and a second plate 17, and repeated descriptions of the same structures will be omitted.

The case 12 has a quadrangular horizontal section, and a variable region 121 with bent units is formed on the circumference of the case 12. The variable region 121 has convex portions 121 a protruded from the outer surface of the case 12, and concave portions 121 b protruded from the inner surface of the case 12.

The variable region 121 is continuously formed along the circumference of the case 12, and a plurality of units of the variable region 121 are disposed in the direction of the height of the case 12 such that they are spaced apart from each other by a distance. The unit of the variable region 121 is formed with two inclined sides and a flat side interconnecting the inclined sides such that it roughly has a trapezoidal section. In this way, when the variable region 121 is formed with a trapezoidal section, a passage for passing a coolant can be formed, and stress generated when it contacts a battery or cell barrier neighboring thereto is prevented from being focused at a specific location.

Meanwhile, the negative electrode uncoated region 221 is tapered at the center thereof, and is attached to a lead member 27 through welding. The lead member 27 is in turn welded to the second plate 17. Accordingly, the negative electrode uncoated region 221 is electrically connected to the case 12 via the lead member 27 and the second plate 17.

A notch 275 is formed at the lead member 27. When the case 12 is elongated in height, the lead member 27 is broken under a predetermined pressure due to the presence of the notch 275. With the present exemplary embodiment, the lead member 27 operates as a current interrupter. In this way, when the lead member 27 is broken, the current is interrupted only with the breakage of one member so that the current interruption can be made easily.

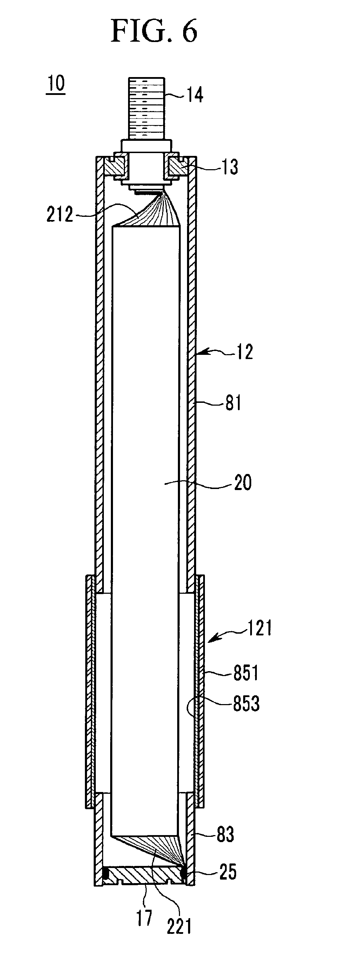

FIG. 6 is a cross-sectional view of a rechargeable battery according to a fourth exemplary embodiment of the present invention.

Referring to FIG. 6, a rechargeable battery 10 according to the present exemplary embodiment has the same structure as that of the rechargeable battery according to the first exemplary embodiment except for the structure of a case 12, and repeated descriptions of the same structures will be omitted.

The case 12 is formed with a quadrangular horizontal section, and has an upper member 81 to which a terminal 14 is fitted, and a lower member 83 connected to the upper member 81 via a variable region 121. However, the present invention is not limited thereto, and the case 12 may be formed with a circular shape or other shapes.

The variable region 121 has a greater elongation property than the upper and lower members 81 and 83. The variable region 121 includes a variable plate 851, and a corrosion resistant layer 853 formed on the inner side of the variable plate 851 (on the side thereof facing the electrode assembly). The variable plate 851 may be formed with a metal or polymer, a material having high elongation, or a material that is heat-treated such that it has high elongation. As the corrosion resistant layer 853 is formed with a material that is not reactant with an electrolyte solution, the variable region 121 does not react with the electrolyte solution and the case 12 is maintained to be stable in shape. However, if the variable plate 851 is formed with a material that is not reactant with the electrolyte solution, the corrosion resistant layer 853 may be omitted.

With the fourth exemplary embodiment of the present invention, if the inner pressure of the case 12 is increased, the variable region 121 is elongated so that the negative electrode uncoated region 221 is broken in connection. When the negative uncoated region 221 is broken, the connection of the negative electrode uncoated region 221 to the case 12 is cut so that the current is interrupted.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly (20) having a first electrode (21), a second electrode (22), and a separator (23) interposed between the first and the second electrodes (21, 22);
a case (12) for mounting the electrode assembly (20) therein;
a terminal (14) electrically connected to the electrode assembly (20) and exposed to the outside of the case (12); wherein
the first electrode (21) is connected to the terminal (14) at one end of the battery and the second electrode (22) is connected to the case (12) at the opposite end of the battery, and
the case (12) comprises at least one length-variable region (121).

2. Rechargeable battery of claim 1, wherein at least one of said connections of the first electrode (21) to the first terminal (14) and the second electrode (22) to the case (12) is adapted to break upon elongation of the length-variable region (121) forming a means for interrupting a current.

3. Rechargeable battery of claim 1 or 2, wherein the at least one length-variable region (121) is provided:
adapted to be elongated in the lengthwise direction of the battery; and/or
adapted to extend in a lengthwise direction stronger than in a width direction of the battery; and/or
on side walls of the case (12) not including the top and bottom surfaces of the case (12); and/or
as a plurality of length-variable regions (121) provided along the height of the case (12) being spaced apart from one another.

4. Rechargeable battery of any of the previous claims, wherein the at least one length-variable region (121) comprises:
a corrugation of the surface of the case (12); and/or
convex portions (121 a) formed on the outer surface of the case (12) and concave portions (121 b) formed on the inner surface of the case (12), the convex and concave portions (121 a, 121 b) being alternately arranged along the height of the case (12); and/or
prominent and depressed portions; and/or
two inclined side surfaces and a flat side interconnecting the inclined side surfaces; and/or
flat walls having a greater elongation property than the other side walls of the case (12).

5. Rechargeable battery of one of the previous claims, wherein the first electrode (21) comprises a first electrode uncoated region (212) with no first electrode active material thereon at one end of the electrode assembly (20) and the second electrode (22) comprises an uncoated region (221) with no second electrode active material thereon at the other end of the electrode assembly (20).

6. Rechargeable battery of one of the previous claims, wherein a first plate (13) is provided closing a first opening (125) of the case (12) at its terminal side and a second opening (126) is provided at the bottom side of the case (12) closed by a second plate (17).

7. Rechargeable battery of one claims 5 or 6, wherein the second electrode uncoated region (221) is attached and welded:
to the second plate (17) and the case (12) such that the connection breaks upon elongation of the length-variable region (121) establishing the means for interrupting a current; and/or
to the case (12) under tensional force in a direction parallel to the elongation direction of the length-variable region (121) such that the connection breaks upon elongation of the length-variable region (121) establishing the means for interrupting a current; and/or
to only a single side of the case (12) such that the connection breaks upon elongation of the length-variable region (121) establishing the means for interrupting a current; and/or
to a lead member (27), the lead member (27) being attached to the bottom of the case (12) through welding and comprising a notch (275) which is adapted to break upon elongation of the length-variable region (121) establishing the means for interrupting a current.

8. Rechargeable battery of one claims 5 to 7, wherein the second electrode uncoated region (221) comprises:
a bisection such that a first part is fitted between a first side wall of the case (12) and the second plate (17) and the second part is fitted between the opposite side wall of the case (12) and the second plate (17) such that at least one of said connections breaks upon elongation of the length-variable region (121) establishing the means for interrupting a current; and/or
a notch such that the second electrode uncoated region (221) is adapted to break at the notch upon elongation of the length-variable region (121) establishing the means for interrupting a current.

9. Rechargeable battery of one of the previous claims, wherein the thickness of the walls of the at least one length-variable region (121) is smaller than the thickness of other side walls of the case (12).

10. Rechargeable battery of one of the previous claims 5 to 9, wherein an insulating layer (35) is formed at the inner surface of the case (12) in the region of the second electrode uncoated region (221) such that it prevents the second electrode uncoated region (221) from contacting the case (12) after interruption of the current.

11. Rechargeable battery of one of the previous claims, wherein the case (12) has an upper member (81) to which the terminal (14) is fitted, a lower member (83) connected to the upper member (81) via the at least one length-variable region (121), and the length-variable region (121) has greater elongation properties than the upper and/or lower members (81, 83).

12. Rechargeable battery of claim 11, wherein the length-variable region (121) comprises a variable plate (851) and/or a corrosion resistant layer (853) formed on the inner surface of the variable plate (851).

13. Rechargeable battery of claim 12, wherein the variable plate (851) is formed of a metal or polymer of a material subjected to heat-treatment to improve its elongation property.

14. Method for interrupting a current in a rechargeable battery comprising:
providing an electrode assembly (20) having a first electrode (21), a second electrode (22), and a separator (23) interposed between the first and the second electrodes (21, 22);
mounting the electrode assembly (20) into a battery case (12);
electrically connecting a terminal (14) to the electrode assembly (20) and exposing the terminal (14) to the outside of the case (12);
elongating an at least one length-variable region (121) of the case (12) upon a pressure increase inside the battery; and
interrupting the current inside the battery as a result of the elongation of the at least one length-variable region (121).

15. Method for interrupting a current in a rechargeable battery according to claim 14, wherein the interruption:
is provided by breaking a connection of the first electrode (21) being connected to the terminal (14) at one end of the battery or the connection of the second electrode (22) to the case (12) at the opposite end of the battery; and/or
is irreversible.

## Patentansprüche

1. Wiederaufladbare Batterie, umfassend:
eine Elektrodenanordnung (20) mit einer ersten Elektrode (21), einer zweiten Elektrode (22) und einem zwischen der ersten und der zweiten Elektrode (21, 22) angeordneten Separator (23),
ein Gehäuse (12), um die Elektrodenanordnung (20) darin zu befestigen,
einen Anschluss (14), der mit der Elektrodenanordnung (20) elektrisch verbunden ist und außerhalb des Gehäuses (12) freiliegt, wobei
die erste Elektrode (21) an einem Ende der Batterie mit dem Anschluss (14) verbunden ist und die zweite Elektrode (22) am gegenüberliegenden Ende der Batterie mit dem Gehäuse (12) verbunden ist und
das Gehäuse (12) mindestens einen längenvariablen Bereich (121) umfasst.

2. Wiederaufladbare Batterie nach Anspruch 1, wobei mindestens eine der Verbindungen der ersten Elektrode (21) mit dem ersten Anschlüsse (14) und der zweiten Elektrode (22) mit dem Gehäuse (12) so gestaltet ist, dass sie bei Dehnung des längenvariablen Bereichs (121) getrennt wird und ein Mittel zum Unterbrechen eines Stromes darstellt.

3. Wiederaufladbare Batterie nach Anspruch 1 oder 2, wobei der mindestens eine längenvariable Bereich (121) folgendermaßen bereitgestellt ist:
dergestalt, dass er sich in der Längenrichtung der Batterie dehnt, und/oder
dergestalt, dass er sich in einer Längenrichtung mehr als in einer Breitenrichtung der Batterie erstreckt, und/oder
an Seitenwänden des Gehäuses (12) mit Ausnahme der Ober- und Unterseite des Gehäuses (12), und/oder
als eine Mehrzahl längenvariabler Bereiche (121), die entlang der Höhe des Gehäuses (12) bereitgestellt und voneinander beabstandet sind.

4. Wiederaufladbare Batterie nach einem der vorangehenden Ansprüche, wobei der mindestens eine längenvariablen Bereich (121) Folgendes umfasst:
eine Riffelung der Oberfläche des Gehäuses (12) und/oder
konvexe Abschnitte (121 a), die an der Außenfläche des Gehäuses (12) ausgebildet sind, und konkave Abschnitte (121 b), die an der Innenfläche des Gehäuses (12) ausgebildet sind, wobei die konvexen und konkaven Abschnitte (121 a, 121 b) über die Höhe des Gehäuses (12) wechselweise angeordnet sind, und/oder
hervorragende und abgesenkte Abschnitte und/oder
zwei geneigte Seitenflächen und eine ebene Seite, welche die geneigten Seitenflächen verbindet, und/oder
ebene Wände mit besseren Dehnungseigenschaften als die anderen Seitenwände des Gehäuses (12).

5. Wiederaufladbare Batterie nach einem der vorangehenden Ansprüche, wobei die erste Elektrode (21) an einem Ende der Elektrodenanordnung (20) einen unbeschichteten Bereich (212) der ersten Elektrode, auf dem sich kein aktives Material der ersten Elektrode befindet, umfasst und die zweite Elektrode (22) am anderen Ende der Elektrodenanordnung (20) einen unbeschichteten Bereich (221), auf dem sich kein aktives Material der zweiten Elektrode befindet, umfasst.

6. Wiederaufladbare Batterie nach einem der vorangehenden Ansprüche, wobei eine erste Platte (13) bereitgestellt ist, die eine erste Öffnung (125) des Gehäuses (12) auf dessen Anschlussseite schließt, und eine zweite Öffnung (126) auf der Bodenseite des Gehäuses (12) bereitgestellt ist, die durch eine zweite Platte (17) geschlossen wird.

7. Wiederaufladbare Batterie nach einem der Ansprüche 5 oder 6, wobei der unbeschichtete Bereich (221) der zweiten Elektrode:
an der zweiten Platte (17) und dem Gehäuse (12) befestigt und angeschweißt ist, sodass die Verbindung bei Dehnung des längenvariablen Bereichs (121) getrennt wird und das Mittel zum Unterbrechen eines Stromes bildet, und/oder
unter Spannungskraft in einer zur Dehnungsrichtung des längenvariablen Bereichs (121) parallelen Richtung am Gehäuse (12) befestigt und angeschweißt ist, sodass die Verbindung bei Dehnung des längenvariablen Bereichs (121) getrennt wird und das Mittel zum Unterbrechen eines Stromes bildet, und/oder
an nur einer Seite des Gehäuses (12) befestigt und angeschweißt ist, sodass die Verbindung bei Dehnung des längenvariablen Bereichs (121) getrennt wird und das Mittel zum Unterbrechen eines Stromes bildet, und/oder
an einem Führungsglied (27) befestigt und angeschweißt ist, wobei das Führungsglied (27) durch Schweißen am Boden des Gehäuses (12) befestigt ist und eine Einkerbung (275) umfasst, die so gestaltet ist, dass sie bei Dehnung des längenvariablen Bereichs (121) bricht und das Mittel zum Unterbrechen eines Stromes bildet.

8. Wiederaufladbare Batterie nach einem der Ansprüche 5 bis 7, wobei der unbeschichtete Bereich (221) der zweiten Elektrode Folgendes umfasst:
eine Zweiteilung, sodass ein erster Teil zwischen eine erste Seitenwand des Gehäuses (12) und die zweite Platte (17) eingepasst ist und der zweite Teil zwischen die gegenüberliegende Seitenwand des Gehäuses (12) und die zweite Platte (17) eingepasst ist, sodass mindestens eine der Verbindungen bei Dehnung des längenvariablen Bereichs (121) getrennt wird und das Mittel zum Unterbrechen eines Stromes bildet, und/oder
eine Einkerbung, sodass der unbeschichtete Bereich (221) der zweiten Elektrode bei Dehnung des längenvariablen Bereichs (121) an der Kerbe brechen kann und das Mittel zum Unterbrechen eines Stromes bildet.

9. Wiederaufladbare Batterie nach einem der vorangehenden Ansprüche, wobei die Stärke der Wände des mindestens einen längenvariablen Bereichs (121) kleiner als die Stärke anderer Seitenwände des Gehäuses (12) ist.

10. Wiederaufladbare Batterie nach einem der vorangehenden Ansprüche 5 bis 9, wobei an der Innenfläche des Gehäuses (12) im Bereich des unbeschichteten Bereichs (221) der zweiten Elektrode eine Isolierschicht (35) ausgebildet ist, sodass diese verhindert, dass der unbeschichtete Bereich (221) der zweiten Elektrode nach Unterbrechung des Stromes das Gehäuse (12) berührt.

11. Wiederaufladbare Batterie nach einem der vorangehenden Ansprüche, wobei das Gehäuse (12) ein oberes Glied (81), an dem der Anschluss (14) angebracht ist, und ein unteres Glied (83), das über den mindestens einen längenvariablen Bereich (121) mit dem oberen Glied (81) verbunden ist, aufweist, und wobei der längenvariable Bereich (121) bessere Dehnungseigenschaften als das obere und/oder das untere Glied (81, 83) aufweist.

12. Wiederaufladbare Batterie nach Anspruch 11, wobei der längenvariable Bereich (121) eine variable Platte (851) und/oder eine korrosionsbeständige Schicht (853), die auf der Innenseite der variablen Platte (851) ausgebildet ist, umfasst.

13. Wiederaufladbare Batterie nach Anspruch 12, wobei die variable Platte (851) aus einem Metall oder einem Polymer eines Materials ausgebildet ist, das zur Verbesserung seiner Dehnungseigenschaften einer Hitzebehandlung unterzogen wurde.

14. Verfahren zum Unterbrechen eines Stromes in einer wiederaufladbaren Batterie, umfassend folgende Schritte:
Bereitstellen einer Elektrodenanordnung (20) mit einer ersten Elektrode (21), einer zweiten Elektrode (22) und einem zwischen der ersten und der zweiten Elektrode (21, 22) angeordneten Separator (23),
Befestigen der Elektrodenanordnung (20) in einem Batteriegehäuse (12),
elektrisches Verbinden eines Anschlusses (14) mit der Elektrodenanordnung (20) und Freilegen des Anschluss (14) außerhalb des Gehäuses (12),
Dehnen mindestens eines längenvariablen Bereichs (121) des Gehäuses (12) bei einer Druckerhöhung innerhalb der Batterie, und
Unterbrechen des Stromes innerhalb der Batterie infolge der Dehnung des mindestens einen längenvariablen Bereichs (121).

15. Verfahren zum Unterbrechen eines Stromes in einer wiederaufladbaren Batterie nach Anspruch 14, wobei die Unterbrechung:
durch Trennen einer Verbindung der ersten Elektrode (21), die an einem Ende der Batterie mit dem Anschluss (14) verbunden ist, oder der Verbindung der zweiten Elektrode (22) mit dem Gehäuse (12) am gegenüberliegenden Ende der Batterie bereitgestellt wird und/oder
irreversibel ist.

## Revendications

1. Batterie rechargeable comprenant :
un ensemble d'électrodes (20) ayant une première électrode (21), une deuxième électrode (22) et un séparateur (23) interposé entre les première et deuxième électrodes (21, 22) ;
un boîtier (12) destiné à monter l'ensemble d'électrodes (20) dedans ;
une borne (14) connectée électriquement à l'ensemble d'électrodes (20) et exposée à l'extérieur du boîtier (12) ; où
la première électrode (21) est connectée à la borne (14) au niveau d'une extrémité de la batterie et la deuxième électrode (22) est connectée au boîtier (12) au niveau de l'extrémité opposée de la batterie, et
le boîtier (12) comprend au moins une région de longueur variable (121).

2. Batterie rechargeable de la revendication 1, dans laquelle au moins l'une desdites connexions de la première électrode (21) à la première borne (14) et de la deuxième électrode (22) au boîtier (12) est adaptée pour se rompre lors de l'allongement de la région de longueur variable (121) formant un moyen permettant d'interrompre un courant.

3. Batterie rechargeable de la revendication 1 ou 2, dans laquelle l'au moins une région de longueur variable (121) est prévue pour être :
adaptée à être allongée dans le sens de la longueur de la batterie ; et/ou
adaptée pour s'étendre dans le sens de la longueur de manière plus importante que dans le sens de la largeur de la batterie ; et/ou
sur les parois latérales du boîtier (12) ne comportant pas les surfaces supérieure et inférieure du boîtier (12) ; et/ou
en tant que pluralité de régions de longueur variable (121) prévues le long de la hauteur du boîtier (12) et écartées les unes des autres.

4. Batterie rechargeable de l'une des revendications précédentes, dans laquelle l'au moins une région de longueur variable (121) comprend :
une ondulation de la surface du boîtier (12) ; et/ou
des parties convexes (121 a) formées sur la surface extérieure du boîtier (12) et des parties concaves (121 b) formées sur la surface intérieure du boîtier (12), les parties (121 a, 121b) convexes et concaves étant agencées en alternance le long de la hauteur du boîtier (12) ; et/ou
des parties proéminentes et enfoncées ; et/ou
deux surfaces latérales inclinées et un côté plat interconnectant les surfaces latérales inclinées ; et/ou
des parois plates ayant une propriété d'allongement plus importante que celle des autres parois latérales du boîtier (12).

5. Batterie rechargeable de l'une des revendications précédentes, dans laquelle la première électrode (21) comprend une première région non revêtue d'électrode (212) sans premier matériau actif d'électrode sur celle-ci au niveau d'une extrémité de l'ensemble d'électrodes (20) et la deuxième électrode (22) comprend une région non revêtue (221) sans deuxième matériau actif d'électrode sur celle-ci au niveau de l'autre extrémité de l'ensemble d'électrodes (20).

6. Batterie rechargeable de l'une des revendications précédentes, dans laquelle une première plaque (13) est prévue pour fermer une première ouverture (125) du boîtier (12) au niveau de son côté de borne et une deuxième ouverture (126) est prévue au niveau du côté inférieur du boîtier (12) fermée par une deuxième plaque (17).

7. Batterie rechargeable de l'une des revendications 5 ou 6, dans laquelle la deuxième région non revêtue d'électrode (221) est fixée et soudée :
à la deuxième plaque (17) et au boîtier (12) de sorte que la connexion se rompe lors de l'allongement de la région de longueur variable (121) en établissant le moyen destiné à interrompre un courant ; et/ou
au boîtier (12) sous une force de tension dans une direction parallèle à la direction d'allongement de la région de longueur variable (121) de sorte que la connexion se rompe lors de l'allongement de la région de longueur variable (121) en établissant le moyen destiné à interrompre un courant ; et/ou
à seulement un côté du boîtier (12) de sorte que la connexion se rompe lors de l'allongement de la région de longueur variable (121) en établissant le moyen destiné à interrompre un courant ; et/ou
à un élément conducteur (27), l'élément conducteur (27) étant fixé à la partie inférieure du boîtier (12) par soudage et comprenant une encoche (275) qui est adaptée pour se rompre lors de l'allongement de la région de longueur variable (121) en établissant le moyen destiné à interrompre un courant.

8. Batterie rechargeable de l'une des revendications 5 à 7, dans laquelle la deuxième région non revêtue d'électrode (221) comprend :
une bisection de sorte qu'une première partie soit ajustée entre une première paroi latérale du boîtier (12) et la deuxième plaque (17) et la deuxième partie est ajustée entre la paroi latérale opposée du boîtier (12) et la deuxième plaque (17) de sorte qu'au moins l'une desdites connexions se rompe lors de l'allongement de la région de longueur variable (121) en établissant le moyen destiné à interrompre un courant ; et/ou
une encoche de sorte que la deuxième région non revêtue d'électrode (221) soit adaptée pour se rompre au niveau de l'encoche lors de l'allongement de la région de longueur variable (121) en établissant le moyen destiné à interrompre un courant.

9. Batterie rechargeable de l'une des revendications précédentes, dans laquelle l'épaisseur des parois de l'au moins une région de longueur variable (121) est inférieure à l'épaisseur des autres parois latérales du boîtier (12).

10. Batterie rechargeable de l'une des revendications précédentes allant de 5 à 9, dans laquelle une couche isolante (35) est formée au niveau de la surface intérieure du boîtier (12) dans la région de la deuxième région non revêtue d'électrode (221) de sorte qu'elle empêche la deuxième région non revêtue d'électrode (221) d'entrer en contact avec le boîtier (12) après l'interruption du courant.

11. Batterie rechargeable de l'une des revendications précédentes, dans laquelle le boîtier (12) possède un élément supérieur (81) auquel la borne (14) est ajustée, un élément inférieur (83) connecté à l'élément supérieur (81) via l'au moins une région de longueur variable (121), et la région de longueur variable (121) présente des propriétés d'allongement plus importantes que celles des éléments (81, 83) supérieur et/ou inférieur.

12. Batterie rechargeable de la revendication 11, dans laquelle la région de longueur variable (121) comprend une plaque variable (851) et/ou une couche résistant à la corrosion (853) formée(s) sur la surface intérieure de la plaque variable (851).

13. Batterie rechargeable de la revendication 12, dans laquelle la plaque variable (851) est formée d'un métal ou d'un polymère d'un matériau soumis à un traitement thermique pour améliorer ses propriétés d'allongement.

14. Procédé destiné à interrompre un courant dans une batterie rechargeable comprenant le fait :
de fournir un ensemble d'électrodes (20) ayant une première électrode (21), une deuxième électrode (22) et un séparateur (23) interposé entre les première et deuxième électrodes (21, 22) ;
de monter l'ensemble d'électrodes (20) dans un boîtier (12) de batterie ;
de connecter électriquement une borne (14) à l'ensemble d'électrodes (20) et d'exposer la borne (14) à l'extérieur du boîtier (12) ;
d'allonger la au moins une région de longueur variable (121) du boîtier (12) lors de l'augmentation de pression à l'intérieur de la batterie ; et
d'interrompre le courant à l'intérieur de la batterie en tant que résultat de l'allongement de l'au moins une région de longueur variable (121).

15. Procédé destiné à interrompre un courant dans une batterie rechargeable selon la revendication 14, dans lequel l'interruption :
est fournie par rupture d'une connexion de la première électrode (21) connectée à la borne (14) au niveau d'une extrémité de la batterie ou de la connexion de la deuxième électrode (22) au boîtier (12) au niveau de l'extrémité opposée de la batterie ; et/ou
est irréversible.
